Europäisches Patentamt

(19) European Patent Office

Office européen des brevets

(11) Publication number: **0 052 525**
**A1**

## (12) EUROPEAN PATENT APPLICATION

(21) Application number: **81305467.3**

(22) Date of filing: **19.11.81**

(51) Int. Cl.³: **G 06 F 3/16**

(30) Priority: **19.11.80 GB 8037139**

(43) Date of publication of application:
**26.05.82 Bulletin 82/21**

(84) Designated Contracting States:
**AT BE CH DE FR GB IT LI NL SE**

(71) Applicant: **Messer, Christopher John**
**Hethe Cottage Blackham**
**Tunbridge Wells Kent(GB)**

(72) Inventor: **Messer, Christopher John**
**Hethe Cottage Blackham**
**Tunbridge Wells Kent(GB)**

(74) Representative: **Crawford, Andrew Birkby et al,**
**A.A. THORNTON & CO. Northumberland House 303-306**
**High Holborn**
**London WC1V 7LE(GB)**

(54) **Improvements in and relating to computers.**

(57) Apparatus for transferring information to and/or from a computer comprises a voice response system in addition to a data transfer unit. The voice response system includes a magnetic tape (19) which has messages recorded at predetermined locations (23). At least some of the locations (23) and preferably all of them have two messages which extend in opposite directions from the location. The tape drive unit (25) therefore has to be capable of driving the tape in either direction at the reproduction speed. The apparatus is arranged to allow transfer of information over a telephone line using multi-frequency tones for the data transfer and an isolating unit is preferably provided to isolate the apparatus from the telephone line. The voice response system may include a plurality of sources of messages with different characteristics whereby to improve the flexibility and speed of response of the system.

Fig 2

- 1 -

## APPARATUS FOR TRANSFERRING INFORMATION TO AND/OR FROM A COMPUTER

The present invention relates to apparatus for transferring information to and/or from a computer by a system generally known as voice response which allows a computer to "talk" to a user.

In a first such system, a recording of various words is held in a disc memory in the form of bytes of digital information; each byte represents one sample of an analogue signal which is sampled at 8,000 Hz. The disc memory forms part of a computer system which is used to perform the "speech" facility; a host computer is required in addition to perform calculations and control the computer operating the "speech" facility. In a second system, a synthesiser is used to replace the disc memory but a further computer is usually still required to operate the synthesiser under the overall control of the host computer.

Both systems can be used with apparatus generating multi-frequency tones (as on "touchtone" telephones) to enable the user to input information to the computer e.g. over a telephone line.

The recorded speech system is extremely expensive but usually has a very limited vocabulary of say 150 words. Further, alterations in the vocabulary are not easily made. The synthesised speech system suffers from the same disadvantages but additionally does not usually achieve readily acceptable speech.

Advances have been made recently in integrated circuits which store "speech" but even these have some design problems such as inflexible vocabularies or poor quality speech.

It is an object of the present invention to provide apparatus for transferring information to and/from a computer which is inexpensive yet provides good quality speech.

The present invention provides apparatus for transferring information to and/or from a computer comprising a recording medium (15) on which messages in the form of words and/or phrases are recorded at predetermined locations (23) indicating the start of two messages extending in opposite directions, and means (22, 25) for enabling the recording medium to be scanned in either direction whereby to reproduce a selected one of the messages.

Among the advantages of the present invention are that any word or message may be recorded and that changing a word or message may be easily undertaken. Further the speech sounds natural and can be in any language. In fact different languages can be used on each piece of apparatus.

In one embodiment, the apparatus is controlled directly by a host computer, there being no intervening "speech" facility computer. In another embodiment, a plurality of different speech sources are provided in which case a computer interface is required to select the appropriate speech source. In both cases, the user accesses the computer via a code generating device but the computer answers with messages in clear language.

Preferably, the recording medium is magnetic tape in which case an electronically controllable tape drive system can be utilised. Other recording mediums can also be used such as discs with optical readers, etc.

In order that the present invention be more readily understood, an embodiment thereof will now be described by way of example with reference to the accompanying drawings, in which:-

Figure 1 shows a schematic diagram of an installation including apparatus according to the present invention;

Figure 2 shows a block diagram of a control system used in apparatus according to the present invention;

Figure 3 shows diagrammatically a part of the apparatus according to the present invention; and

Figure 4 shows a block diagram of a portion of an alternative embodiment of the present invention.

The embodiments will be described in relation to their use where the user accesses the computer via a telephone line and inputs data to the computer using a multi-frequency generator device. The use of a telephone line and multi-frequency device are purely exemplary.

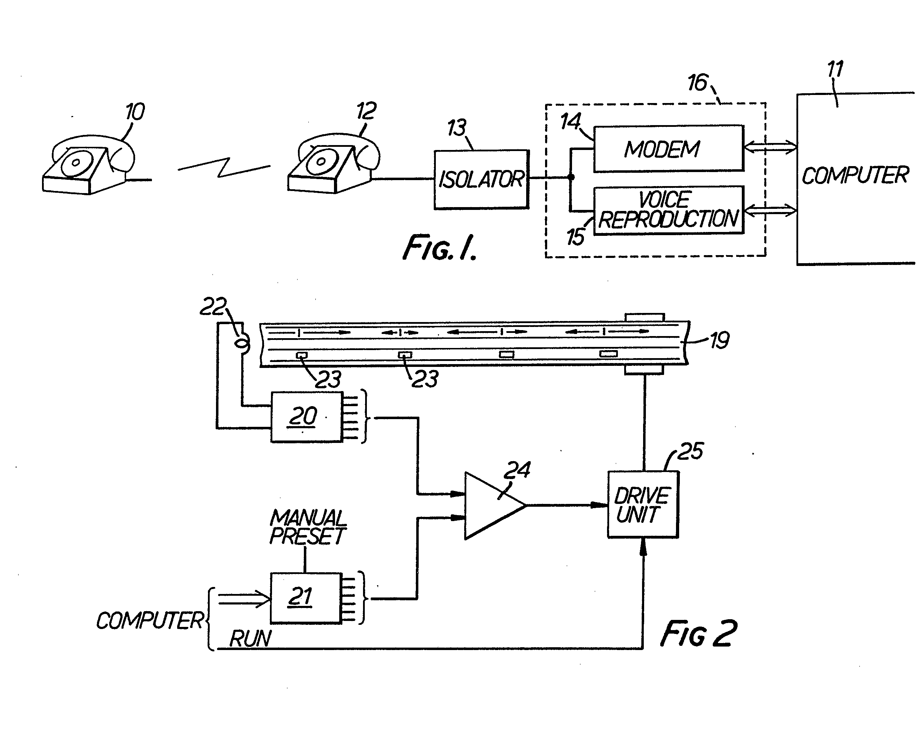

Figure 1 shows the case where the user is at a remote location represented by a telephone 10. As is now common, the user can contact the main computer 11 by dialling a telephone number. The computer 11 is shown as having a telephone 12 which is isolated by a safety device 13 and then fed to a MODEM unit 14 which controls the operation of the answering of the user's telephone call and also the transfer of data to the host computer. The MODEM unit 14 and voice reproduction unit 15 are conveniently incorporated in a single module represented by the broken line 16. The module is connected to the host computer and the isolator 13 by conventional data links. The user is provided with a data input device in the form of a multi-frequency generator device which produces Dual Tone Multi frequency (DTMF) codes in response to key depression. The link with the telephone 10 can either be via an acoustic coupling or via a jack plug or other suitable device. In those countries which use multifrequency dialling for their telephone systems a separate generator device may not be required as the keyboard of the telephone control could be used.

The voice reproduction unit 15 comprises an electronically controllable cassette tape drive unit (not shown) capable of driving at high speed (up to 200 cms/sec) in either direction as well as a special drive control circuit which is shown in Figure 2 and will be described in more detail later. A conventional cassette tape is prerecorded on one of its tracks with markers indicative of predetermined locations on the tape. The markers are predetermined distance apart, say a distance representing 2 secs at normal playing speed, and each marker uniquely identifies its location by means of a suitable code. The markers on the tape mark the start of messages recorded on another track of the tape to be output to the user and preferably at least some of the markers and advantageously all of the markers mark the start of two messages, e.g. one running forward from the marker and the other backwards from the marker but on a separate track from the markers.

Basically all that is required in order to play a message to a user is for the computer 11 to provide a signal telling the drive control circuit the marker of the start of the desired message and once the tape is in position a "read" instruction from the computer 11 is executed. This will now be described in more detail with reference to Figure 2.

The control circuit comprises two registers one in the form of a counter 20. The counter 20 has its input connected to a reading head 22 of the cassette player, which head is arranged to scan the track of the tape containing the markers 23 so as to latch the marker identification code appearing at that instant at the head 22. The register 21 has its input connected to a data output from the computer 11 so as to latch the marker code indicating the desired position of the tape. The outputs from the counters 20 and 21 are compared in a digital comparator 24, the output of which is a control signal which determines the direction of movement of the tape via a drive unit 25.

In use, and on the assumption that the cassette has been newly loaded into the machine, initially the counter 20 does not indicate correctly the location of the tape. In this case, the tape moves at normal speed until it reproduces one of the marker codes. This is then used for comparison with the marker code in the register 21 (if loaded) and the tape is thereafter driven in the appropriate direction at the fast speed. While moving at the fast speed, the head 22 cannot accurately read the marker codes but it can give an indication of the passage of a marker code and this is used to increment or decrement of counter 20 depending on a logic signal from the drive unit 25 until the codes in the counter 20 and register 21 are in agreement. The drive is then preferably altered to allow the head 22 to read the code at that location to accurately check the position of the tape.

An advantage of the present apparatus is that the owner of the apparatus can pre-record his own messages. This is achieved by providing the register 21 with a manual preset facility, usually in the form of a thumb wheel, so that the register 21 can be loaded with a particular location where the message is to be recorded. When recording a message, the signal is recorded on a separate track, the end of which is indicative of the end of the message. This signal controls the drive unit 25 so that either the tape comes to a stop or else the counter 21 is interrogated to find the desired new location of the tape. As an aid in the recording of messages, the user can be provided with a visual indicator of the marker.

One further feature of the MODEM unit should be mentioned and that is the provision of a "programmable" patch board in the circuit for converting (DTMF) codes to serial ASCII for the computer. The patch board is programmable in so far as six of the keys on the keyboard are concerned to allow for particular functions.

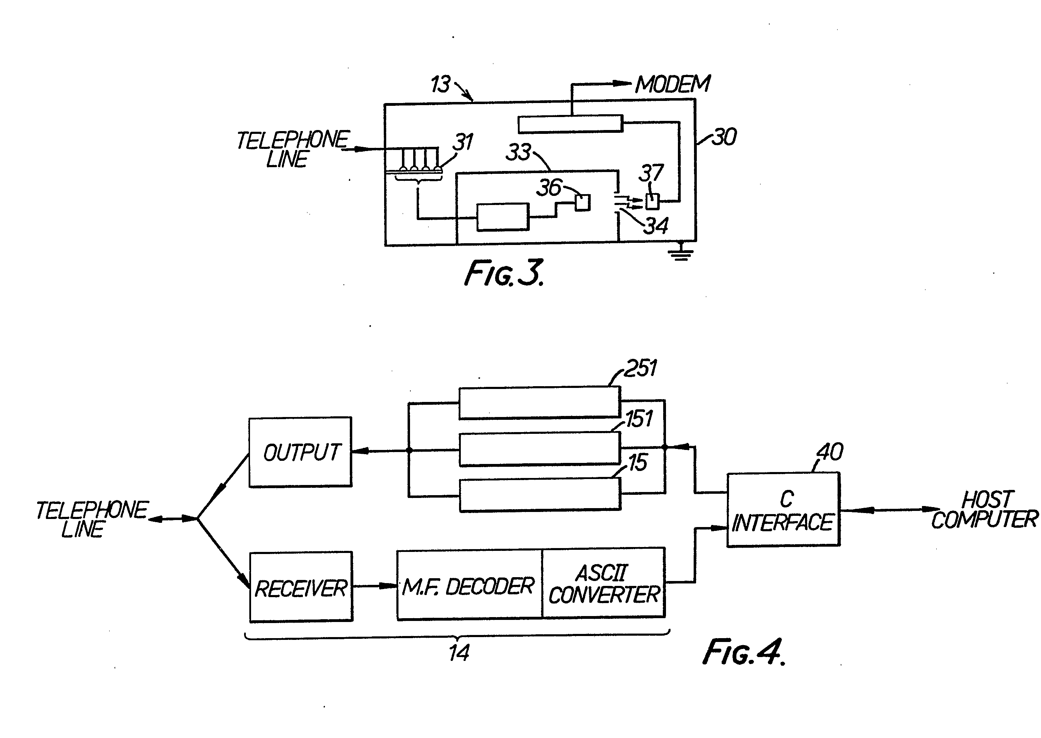

A feature of the present invention which is mandatory in U.K. and desirable worldwide is the safety device 13 shown in Figure 3. This comprises an earthed metal housing 30 having connections to the telephone line via terminals 31 and connections to the MODEM unit via a conventional data connector (not shown). The telephone line is isolated from the MODEM using a non-physical e.g. optical link. The circuitry associated with the telephone line is housed within an earthed metal shield 33 within the housing 30 so that it is physically isolated from the circuitry associated with the MODEM. Two small holes (only one, 34 is shown) are provided in one wall of the shield 33 to provide light paths, one for transmitting and one for receiving. Each light path comprises one transmitter 36 and one receiver 37. The holes are just large enough to allow light from a light emitting device e.g. an infra-red emitting diode to pass into or out of the shield but are small enough to ensure that any sparks are earthed. The isolator derives the power it requires from the telephone line in a conventional manner.

Figure 4 shows an alternative construction for the module 16 shown in Figure 1. Certain parts are the same as in the Figure 1 construction and these are given the same reference numerals and will not be described further.

The main alterations are that a plurality of speech sources are provided, one of which is the voice reproduction unit 15 described above and the others take any convenient form such as one or more speech ICs. We have found that the response time of the apparatus can be improved using a plurality of speech sources each with different characteristics.

In Figure 4 we have shown three speech sources namely the voice reproduction unit 15, a speech IC 151 containing a predefined vocabulary in the form of a circuit called a Digitalker manufactured by National Semiconductor, and a speech synthesiser 251 in the form of a circuit manufactured by Triangle Digital Services and sold under the name Instant Speech.

The provision of a plurality of speech sources allows one or any combination to be used. Since speed is not at a premium, a microcomputer 40 implements, in software, the functions of three UART devices and enables information transfer to and from the host computer and the modem 14.

In practice, the microcomputer accepts 3-digit addresses from the host computer and converts these to binary storing them in a FIFO buffer. On receipt of a + or a - signal it produces the next stored code to activate one of the speech sources. At the end of speech, which is recognised by signals from the speech source being used, it issues a line feed character back to the host computer. The particular speech source required is determined by the host computer and is selected by prefacing the binary message address by a particular code.

CLAIMS:

1.      Apparatus for transferring information to and/or from a computer comprising a recording medium (15) on which messages in the form of words and/or phrases are recorded at predetermined locations (23) on the recording medium, at least some of the predetermined locations (23) indicating the start of two messages extending in opposite directions, and means (22, 25) for enabling the recording medium to be scanned in either direction whereby to reproduce a selected one of the messages.

2.      Apparatus according to claim 1, wherein the recording medium is magnetic tape (19) and the enabling means comprises a tape drive unit (22) capable of driving the tape in either direction.

3.      Apparatus according to claim 2, and including a control apparatus (20, 21, 24) for controlling operation of the tape drive unit (25) for causing the tape to be moved at a high speed to a predetermined location and then to drive the tape at a reproduction speed in the desired direction.

4.      Apparatus according to claim 1, 2 or 3 wherein there are a plurality of sources of messages (15, 151, 251), one of which (15) is the recording medium, and selection means (40) are provided for outputting speech from a selected one of the sources.

5.      Apparatus according to any one of the preceding claims an isolator (13) is provided to enable the apparatus to be connected to a telephone line.

6.      Apparatus according to any one of the preceding claims wherein converter means (14) are provided for converting input information in the form of multi frequency codes to a code acceptable to the computer.

**Fig. 1.**

ISOLATOR — MODEM — VOICE REPRODUCTION — COMPUTER

10 12 13 14 16 15 11

**Fig 2**

MANUAL PRESET

COMPUTER { RUN

DRIVE UNIT

20 21 22 23 23 24 25 19

1/2

0052525

MODEM

13

TELEPHONE LINE

31

33

36

37

34

30

*Fig.3.*

2/2

251

151

15

OUTPUT

TELEPHONE LINE

RECEIVER

M.F. DECODER

ASCII CONVERTER

C INTERFACE

40

HOST COMPUTER

14

*Fig.4.*

0052525

0052525

**European Patent Office**

## EUROPEAN SEARCH REPORT

Application number

EP 81 30 5467

### DOCUMENTS CONSIDERED TO BE RELEVANT

| Category | Citation of document with indication, where appropriate, of relevant passages | Relevant to claim |
|---|---|---|
| X | US - A - 3 934 226 (STONE et al.) | |
| Y | * Column 3, lines 8-30; column 3, lines 43-48; column 4, lines 15-27; column 7, lines 4-19; column 7, lines 33-58; column 8, lines 25-33 * | 1-6 |
| | -- | |
| Y | DE - A - 2 442 438 (SCHÖNDORF) | |
| | * Page 2, lines 20-28; page 5, lines 1-21 * | 1,2 |
| | -- | |
| Y | GB - A - 1 202 381 (STAAR DEVELOPMENT COMPANY) | |
| | * Page 1, lines 13-39; page 2, line 90 - page 3, line 9 * | 1,3 |
| | -- | |
| Y | GB - A - 1 208 921 (COGNITRONICS CORPORATION) | |
| | * Page 1, lines 14-70; page 2, lines 83-129 * | 4,6 |
| | -- | |
| Y | PROCEEDINGS OF THE INTERNATIONAL SEMINAR ON DIGITAL COMMUNICATIONS, IEEE, 7th-9th March 1978, pages C7.1-C7.4 New York, U.S.A. H.R. SCHINDLER et al.: "Opto-coupler-based extension/subscriber-line circuit" | |
| | * Page C7.1, column 2, lines 31-42 * | 5 |
| | ---- | |

**CLASSIFICATION OF THE APPLICATION (Int. Cl. 3)**

G 06 F 3/16

**TECHNICAL FIELDS SEARCHED (Int.Cl. 3)**

G 06 F 3/16
G 09 B 5/04
G 11 B 27/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 04-02-1982 | LACROIX |

EPO Form 1503.1 06.78